(19) Europäisches Patentamt
European Patent Office
Office européen des brevets

(11) **EP 0 521 448 B2**

(12) **NEUE EUROPÄISCHE PATENTSCHRIFT**

(45) Veröffentlichungstag und Bekanntmachung des Hinweises auf die Entscheidung über den Einspruch:
**05.02.2003   Patentblatt 2003/06**

(51) Int Cl.$^7$: **G01F 1/60**

(45) Hinweis auf die Patenterteilung:
**17.03.1999   Patentblatt 1999/11**

(21) Anmeldenummer: **92111033.4**

(22) Anmeldetag: **30.06.1992**

(54) **Schaltungsanordnung zur Ermittlung von Fehlern in einer magnetisch-induktiven Durchflussmessanordnung**

Circuit for the determination of errors in a magnetic-inductive flowmeter arrangement

Circuit pour la détermination des erreurs d'un débitmètre magnétique-inductif

(84) Benannte Vertragsstaaten:
**CH DE DK FR GB LI NL**

(30) Priorität: **04.07.1991   DE 4122225**

(43) Veröffentlichungstag der Anmeldung:
**07.01.1993   Patentblatt 1993/01**

(73) Patentinhaber: **Fischer & Porter GmbH**
**D-37079 Göttingen (DE)**

(72) Erfinder:
• **Herwig, Jörg**
**W-3500 Kassel (DE)**
• **Keese, Dieter**
**W-3417 Wahlsburg (DE)**
• **Rackebrandt, Karl-Heinz**
**W-3404 Adelebsen (DE)**
• **Schwiderski, Hans Werner**
**W-3412 Nörten-Hardenberg (DE)**

(74) Vertreter:
**Fincke, Karl Theodor, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm,**
**Kopernikusstrasse 9**
**D-81679 München (DE)**

(56) Entgegenhaltungen:
**EP-A- 0 304 774          DE-C- 3 808 913**
**US-A- 4 157 035**

• **PATENT ABSTRACTS OF JAPAN vol. 14, no. 66 (P-1003) 7. Februar 1990 & JP-A-01 288 724 (TOSHIBA CORP.)**
• **Book no. , 1974, 'INDUKTIVE STRöMUNGSMESSUNG', SCHOMMARTZ VEB VERLAG TECHNIK, BERLIN**
• **Book no. , 1974, 'INDUKTIVE STROEMUNGSMESSUNG', SCHOMMARTZ VEB VERLAG TECHNIK, BERLIN**

EP 0 521 448 B2

**Beschreibung**

Die Erfindung betrifft eine Schaltungsanordnung zur Ermittlung von Fehlern in einer magnetisch-induktiven Durchflußmeßanordnung nach dem Oberbegriff des Anspruchs 1 (Schommartz: "Induktive Strömungsmessung", VEB Verlag Technik, 1974 und US-A-4 157 085).

Die DE 38 08 913 C1 offenbart eine Schaltungsanordnung zur Ermittlung von Fehlern in einer magnetisch-induktiven Durchflussmessanordnung, die von einem elektrisch leitenden Messstoff durchströmt wird und in der der Messstoff mit wenigstens zwei Elektroden in Kontakt zu bringen ist, die Messsignale an ihnen zugeordnete Eingänge einer Auswerteschaltung abgeben, wobei die Auswerteschaltung aufgrund einer Ungleichheit der Beträge der von den Elektroden abgeleiteten Signalspannungen auf einen Fehler erkennt und wobei die durch den Fehler ungenau gewordene Signalspannung durch einen zuvor abgespeicherten Wert dieser Signalspannung ersetzt wird.

Aufgabe der Erfindung ist es, eine Schaltungsanordnung dieser Art anzugeben, die auf Fehler in dem vor der Auswerteschaltung liegenden Teil der Schaltungsanordnung, insbesondere auf eine Isolation wenigstens eines Eingangs der Auswerteschaltung anspricht. Eine solche Isolation kann dadurch hervorgerufen werden, daß die dem jeweiligen Eingang der Auswerteschaltung zugeordnete Elektrode durch den Meßstoff mit einem isolierenden Belag versehen ist, daß die elektrisch leitende Verbindung zwischen der jeweiligen Elektrode und dem Eingang der Auswerteschaltung unterbrochen ist oder daß in irgendeiner anderen Weise der elektrisch leitende Weg zwischen dem Bezugspotential des Meßstoffs und dem jeweiligen Eingang der Auswerteschaltung gestört ist.

Die Lösung dieser Aufgabe ist im Kennzeichen des Anspruchs 1 angegeben.

Vorteilhafte Ausgestaltungen der Erfindung sind in den Unteransprüchen angegeben.

Die Erfindung wird im folgenden an Ausführungsbeispielen unter Hinweis auf die beigefügten Zeichnungen erläutert.

Fig. 1 zeigt eine erste Ausführungsform der Schaltungsanordnung.

Fig. 2 zeigt in einem Diagramm Diagnose-Zeitabschnitte und Meß-Zeitabschnitte bei einem bipolar wechselnden Erregerfeld.

Fig. 3 zeigt Diagnose-Zeitabschnitte und Meß-Zeitabschnitte bei einem sich bipolar ändernden sinusförmigen Erregerfeld.

Fig. 4 dient der Erläuterung der Wirkungsweise der Übersteuerung.

Fig. 5 zeigt eine zweite Ausführungsform der Schaltungsanordnung.

Gleiche Bezugsziffern und Bezugshinweise beziehen sich auf gleiche bzw. gleichartige Bauelemente.

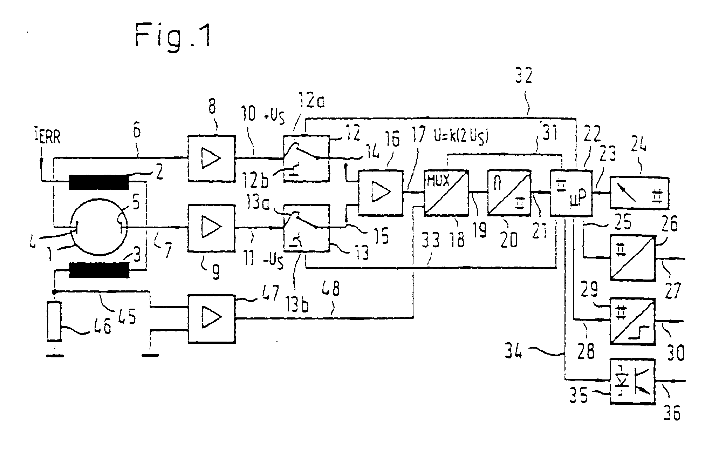

Die Durchflußmeßanordnung in der Ausführungsformen nach Fig. 1 weist ein Meßrohr 1 auf, das rechtwinklig zu seiner Längsrichtung von einem durch Spulen 2 und 3 zu erzeugenden Magnetfeld zu durchsetzen ist. Die Spulen 2 und 3 liegen in Reihe - können aber auch parallel liegen - und sind von einem Erregerstrom $I_{ERR}$ zu durchströmen. An den Innenwänden des Meßrohrs 1 befinden sich rechtwinklig zur Längsrichtung des Magnetfelds einander gegenüberliegend zwei Elektroden 4 und 5, von denen eine Spannung abzugreifen ist, die im wesentlichen proportional zum Volumenstrom eines Es Meßrohr 1 durchfließenden Meßstoffs ist.

Bei der Ausführungsform nach Fig. 1 sind die Elektroden 4 und 5 über Leitungen 6 und 7 mit Eingängen von Impedanzwandlem 8 und 9 relativ hoher Eingangsimpedanz und niedriger Ausgangsimpedanz verbunden, die räumlich dicht den Elektroden 4 und 5 zugeordnet sind. Die Ausgänge der Impedanzwandler 8 und 9 sind über Leitungen 10 und 11 mit einem Pol 12a bzw. 13a bipolarer Schalter 12 bzw. 13 verbunden.

Der andere Pol 12b bzw. 13b der bipolaren Schalter 12 bzw. 13 liegt auf Bezugspotential. Die Ausgänge der Schalter 12 bzw. 13 sind über Leitungen 14 bzw. 15 mit zwei Eingängen eines Signalverstärkers 16 verbunden. Der Ausgang des Signalverstärkers 16 ist über eine Leitung 17 mit einem Eingang eines Multiplexers 18 verbunden. Der Ausgang des Multiplexers 18 ist mit einem Eingang eines Analog-DigitalWandlers 20 verbunden. Der Ausgang des Analog-Digitalwandlers 20 ist über eine Leitung 21 mit einem Eingang eines Mikroprozessors 22 verbunden. Der Mikroprozessor steuert über eine Leitung 31 den Multiplexer 18 und über Leitungen 32 und 33 die Schalter 12 und 13.

Ausgänge des Mikroprozessors 22 sind über eine Leitung 23 mit einem alphanumerischen LCD-Display 24, über eine Leitung 25 mit einer Strom-Ausgangsschaltung 26 für ein an eine Leitung 27 anzuschließendes Registriergerät, über eine Leitung 28 mit einer Binärimpuls-Ausgangsschaltung 29 für ein an eine Leitung 30 anzuschließendes Binärimpuls-Auswertegerät und über eine Leitung 34 mit einer Optokopplerimpuls-Ausgangsschaltung 35 für ein an eine Leitung 36 anzuschließendes Optokopplerimpuls-Auswertegerät angeschlossen.

Über die Leitungen 32 und 33 sind die Schalter 12 und 13 so zu steuern, daß entweder beide Schalter den in Fig. 1 dargestellten Zustand einnehmen, oder der eine Schalter 12 oder der andere Schalter 13 über den Pol 12b bzw. 13b auf Bezugspotential geschaltet ist oder beide Schalter 12 und 13 über die Pole 12b bzw. 13b auf Bezugspotential geschaltet sind.

Im normalen Betriebszustand liefern die Elektroden 4 und 5 Signalspannungen gleichen Betrags, aber entgegengesetzten Vorzeichens. Beispielsweise hat die Signalspannung am Ausgang des Impedanzwandlers 8 die Amplitude $+U_S$ und die Signalspannung am Ausgang des Impedanzwandlers 9 die Amplitude -

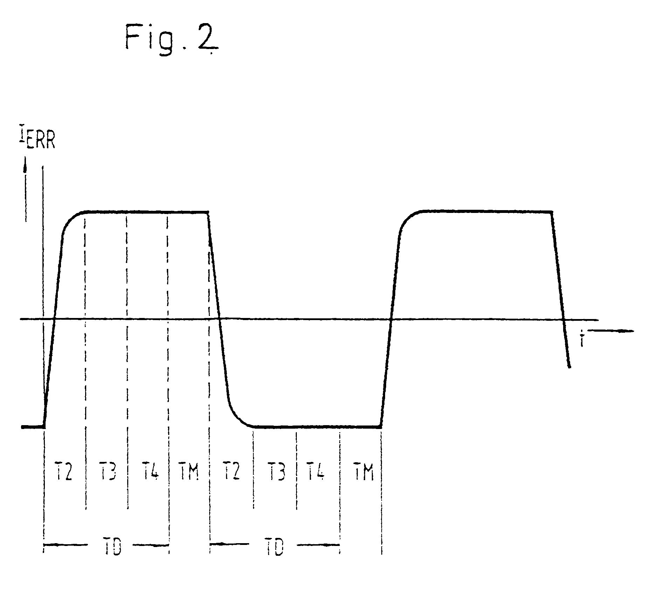

$U_S$. Am Ausgang des Signalverstärkers 16 entsteht somit ein verstärktes Signal U = k (2 $U_S$), wobei k ein Proportionalitätsfaktor ist. Dieses verstärkte Signal wird nur während der Meß-Zeitabschnitte TM (vgl. Fig. 2) erfaßt. Während eines Diagnose-Zeitabschnitts $T_2$ liegt der Schalter 13 über seinem Pol 13b auf Bezugspotential, während eines Diagnose-Zeitabschnitts $T_3$ liegt der Schalter 12 über seinem Pol 12b auf Bezugspotential, während eines Diagnose-Zeitabschnitts $T_4$ liegen beide Schalter 12 und 13 über die Pole 12b und 13b auf Bezugspotential. Die Gesamtdauer der Diagnose-Zeitabschnitte $T_2$, $T_3$ und $T_4$ beträgt TD.

Bei einem ungestörten Betrieb erhält man während der Diagnose-Zeitabschnitte $T_2$ und $T_3$ am Ausgang des Signalverstärkers 16 die Hälfte der Amplitude des Signals U, also 1/2 U. Diese Signale werden vom Analog-Digital-Wandler 20 in Digitalsignale umgewandelt, von dem Mikroprozessor 22 ausgewertet und als "störungsfrei" bewertet.

Ist die Elektrode 4 bzw. 5 mit einem isolierenden Belag versehen, so fließt kein Biasstrom in den Eingang des entsprechenden Impedanzwandlers 8 bzw. 9. Dies führt zu einer Übersteuerung des Ausgangs des Impedanzwandlers 8 bzw. 9 und somit zu einer Übersteuerung des Ausgangssignals des Signalverstärkers 16, die vom Mikroprozessor 22 erfaßt wird und als "Störung" bewertet wird.

Da die Schalter 12 und 13 im Wechsel an die Pole 12a und 13a bzw. 12a und 13b bzw 12b und 13a bzw. 12b und 13b angeschlossen werden, kann der Mikroprozessor erfassen, ob die Elektrode 4 oder die Elektrode 5 oder beide Elektroden 4 und 5 mit einem isolierenden Belag versehen sind oder ob sonstige Störungen in den Leitungsverbindungen zwischen den Eingängen der Schalter 12 und 13 und dem Bezugspotential des Meßstoffs im Meßgerät 1 vorliegen.

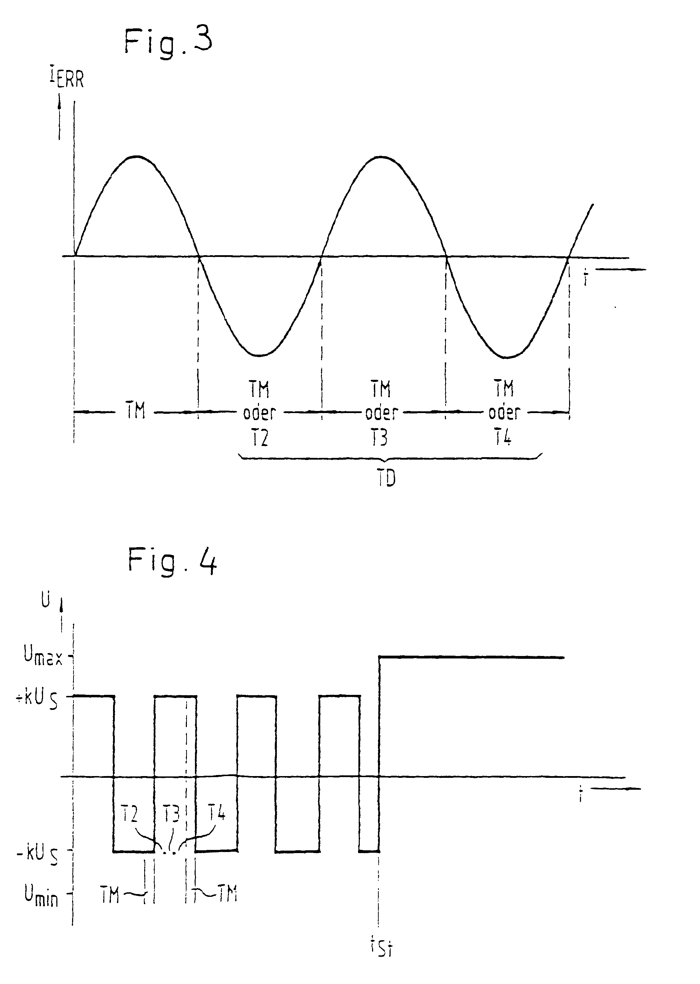

Fig. 4 zeigt schematisch das Pendeln des Ausgangssignals des Signalverstärkers 16 im Normalzustand zwischen +$kU_S$ und -$kU_S$ und das Auftreten einer erfaßten Störung in einem Diagnose-Zeitabschnitt $T_3$ zum Zeitpunkt $t_{St}$. Dann springt das Signal z. B. auf $U_{max}$. Die Polarität des Signals zum Zeitpunkt $t_{St}$ ist nicht bestimmbar; das Signal springt also auf $U_{max}$ oder $U_{min}$.

Ist dem von dem Signalverstärker 16 abgegebenen Signal ein großes Störsignal überlagert, so spricht der Mikroprozessor 22 hierauf ebenfalls an.

Baut sich ein isolierender Belag auf einer der Elektroden 4 bzw. 5 allmählich auf, so nimmt der Rauschanteil der von der jeweiligen Elektrode 4 bzw. 5 abgegebenen Signalspannung ebenfalls allmählich zu, und auch dies kann aus dem eben genannten Grund der Mikroprozessor 22 erkennen. Aus dem gleichen Grund kann der Mikroprozessor 22 auch unterschiedlich starke isolierende Beläge der Elektroden 4 und 5 wegen der unterschiedlichen Rauschanteile in den von den Elektroden 4 und 5 abgegebenen Signalen erkennen, insbesondere vor einem vollständigen Ausfall einer der Elektroden 4 bzw. 5.

Der Meßstoff in einer isolierten Rohrleitung wird meist mittels einer zwischen dem Meßrohr und der Rohrleitung befindlichen Erdungsscheibe auf Bezugspotential gebracht. Auch wenn eine solche Erdungsscheibe mit einem isolierenden Belag versehen ist, erkennt dies der Mikroprozessor 22.

Ebenfalls erkennt der Mikroprozessor 22, ob eine der Leitungen 6 oder 7 unterbrochen ist oder ob beide Leitungen 6 und 7 unterbrochen sind und auch, ob eine elektrisch leitende Verbindung zwischen wenigstens einer der Elektroden 4 und 5 mit dem Bezugspotential vorliegt oder ob wenigstens eine der Leitungen 6 und 7 mit dem Bezugspotential elektrisch leitend verbunden ist.

Die Wirkungsweise der Schaltungsanordnung nach Fig. 1 bleibt grundsätzlich erhalten, wenn man die Impedanzwandler 8 und 9 wegläßt. In der Praxis kann dies jedoch zu Schwierigkeiten, zum Beispiel zu Mikrophonie, führen, da dann die Leitungen 6, 10, 14 bzw. 7, 11, 15 beidendig hochohmig abgeschlossen sind.

Die Eingänge der Impedanzwandler 8 und 9 können mit Bias-Widerständen versehen sein. Dies hat zwar zur Folge, daß die isolierten Elektroden 4 bzw. 5, die isolierte Erdungsscheibe im Rohr 1 oder unterbrochene Leitungen 6 bzw. 7 die Impedanzwandler 8 und 9 nicht übersteuern. Jedoch lassen sich dann mit der Schaltung doch noch unsymmetrische Elektrodenimpedanzen erkennen, da diese, wie oben ausgeführt, zu unterschiedlichen Rauschanteilen in den von den Elektroden 4 und 5 abgegebenen Signalen führen. Auch läßt sich dann noch eine Unterbrechung der Leitungen 6 und 7 und eine Verbindung der Leitungen 6 und 7 mit Bezugspotential sowie ein leitfähiger Belag zwischen einer Elektrode 4 bzw. 5 und dem Bezugspotential erkennen.

Bei der beschriebenen Ausführungsform wird das Meßsignal nur in den Meß-Zeitabschnitten TM (vgl. Fig. 2) erfaßt. Wie Fig. 3 zeigt, kann bei einem sich bipolar sinusförmig ändernden Erregerfeld das Meßsignal ständig erfaßt werden: Die Meß-Zeitabschnitte TM erstrecken sich dabei über volle Halbperioden. Ist jedoch eine Diagnose erwünscht, so kann während Diagnose-Zeitabschnitten $T_2$, $T_3$ und $T_4$, die die entsprechenden Meß-Zeitabschnitte TM ersetzen, eine Diagnose in oben angegebenem Sinne ausgeführt werden. Selbstverständlich entfällt dann während des gesamten Diagnose-Zeitabschnitts TD die Erfassung des Meßsignals.

Die Schaltungsanordnung kann - insbesondere für den in Zusammenhang mit Fig. 2 erläuterten Fall - mit einem in Reihe zu den Spulen 2 und 3 liegenden Widerstand 46 ergänzt werden, an dem eine den Erregerstrom $I_{ERR}$ proportionale Spannung über eine Leitung 45 abgegriffen, in einem Verstärker 47 verstärkt und über eine Leitung 48 einem Eingang des Multiplexers 18 zugeführt wird. Durch eine gleichzeitige Erfassung des Ausgangssignals des Signalverstärkers 16 und der an der Leitung 48 liegenden Bezugsspannung ist eine Auswertung des von dem Signalverstärker 16 abgegebenen Signals während der Diagnose-Zeitabschnitte TD möglich.

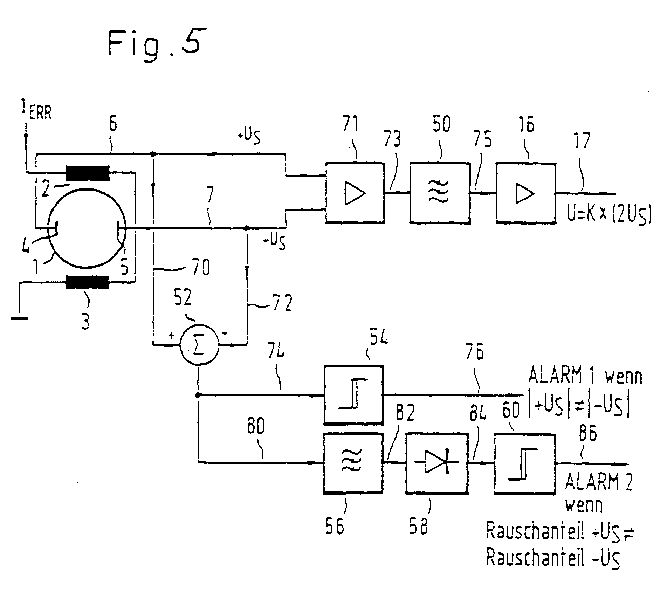

Bei der Schaltungsanordnung gemäß Fig. 5 ist ein Summierer 52 vorgesehen, dessen Eingänge über Leitungen 70, 72 an die Elektroden 4, 5 angeschlossen sind und dessen Ausgang über eine Leitung 74 an einen Schwellwertschalter 54 angeschlossen ist, dessen Ausgang über eine Leitung 76 mit einem Alarmgeber Alarm I verbunden ist. Die Elektroden 4, 5 sind überdies mit Eingängen eines Eingangsverstärkers 71 verbunden, dem über eine Leitung 73 ein Tiefpaßfilter 50 nachgeschaltet ist. Der Ausgang des Tiefpaßfilters 50 ist durch eine Leitung 75 über einen Verstärker 16 mit einer Leitung 17 verbunden, die zu einer Auswerteschaltung führt. Die Ausgangsspannung der Leitung 17 ist normalerweise

$$U = k \times (2U_S).$$

Wenn I+$U_S$I ungleich I-$U_S$I ist, liegt eine Störung vor, und die Ausgangsspannung des Summierers 52 ist ungleich Null.

Der Schwellwertschalter 54 gibt dann über die Leitung 76 ein Alarmsignal an den Alarmgeber Alarm 1.

Oberdies liegt am Ausgang des Summierers 52 über eine Leitung 80 ein Hochpaßfilter 56, dessen Ausgang über eine Leitung 82 mit einem Demodulator 58 verbunden ist. Der Ausgang des Demodulators 58 ist über eine Leitung 84 und einen Schwellwertschalter 60 verbunden, dessen Ausgang über eine Leitung 86 mit einem zweiten Alarmgeber Alarm 2 verbunden ist.

Liegt eine Störung vor, so ist der Rauschanteil in den Signalen +$U_S$ und -$U_S$ verschieden. Dies führt zu einem hochfrequenten Signal auf der Leitung 80 und daher zu einem Ansprechen des Alarmgebers Alarm 2.

Grundsätzlich ist es möglich, nur den Alarm 2 vorzusehen.

Allgemein gibt der Summierer 52 ein Ausgangssignal ab, wenn Unsymmetrien in der Schaltungsanordnung vor dem Summierer 52 sind. Solche Unsymmetrien können zum Beispiel entstehen durch

- einen isolierenden Belag auf einer Oberfläche wenigstens einer der Elektroden 4, 5,
- durch einen Masseschluß wenigstens einer der Elektroden,
- durch eine Unterbrechung wenigstens einer der Leitungen 6, 7, 70, 72,
- durch einen Masseschluß wenigstens einer der Leitungen 6, 7, 70, 72,
- durch eine unterschiedliche Impedanz der Elektroden 4, 5 etwa durch Aufwachsen eines isolierenden Belags auf einer Oberfläche wenigstens einer der Elektroden.

Die Ausgangsleitungen 76, 86, die zu den Alarmgebern Alarm 1, Alarm 2, führen, können wie bei der ersten Ausführungsform mit einem Mikroprozessor verrunden sein. Der Mikroprozessor wertet die verschiedenen Signale aus und gibt zum Beispiel über ein Display und/oder einen Binärausgang eine entsprechende Fehlermeldung aus.

Die beschriebenen Ausführungsformen sind grundsätzlich unabhängig von der normalen Auswertung der Signale +$U_S$ und - $U_S$, von der Form dieser Signale +$U_S$, -$U_S$ und von dem zeitlichen Verlauf des Erregerstroms $I_{ERR}$.

**Patentansprüche**

1. Schaltungsanordnung zur Ermittlung von Fehlern in einer magnetisch-induktiven Durchflußmeßanordnung, die von einem elektrisch leitenden, auf einem Bezugspotential gehaltenen Messstoff durchströmt wird und in der der Messstoff mit wenigstens zwei Elektroden (4, 5) in Kontakt zu bringen ist, die Messsignale an ihnen zugeordnete Eingänge einer Auswerteschaltung abgeben, wobei der Auswerteschaltung eine Alarmgeberschaltung (12, 13; 52, 54; 52, 56, 58, 60) vorgeschaltet ist,
   **dadurch gekennzeichnet, dass** die Alarmgeberschaltung bei Ungleichheit der Rauschanteile der von den Elektroden (4, 5) abgeleiteten Signalspannungen ein Alarmsignal abgibt. werteeinheit (24, an 27, an 30, an 35) verbunden ist.

2. Schaltungsanordnung nach Anspruch 1, **dadurch gekennzeichnet, daß** der Auswerteschaltung eine Schalteranordnung (12, 13) vorgeschaltet ist, mittels der wenigstens eine der Elektroden (4, 5) von dem ihr zugeordneten Eingang der Auswerteschaltung zu trennen und der ihr zugeordnete Eingang an das Bezugspotential zu legen ist, daß die Auswerteschaltung einen Signalverstärker (16) enthält, der bei Isolation wenigstens eines Eingangs der Auswerteschaltung übersteuert wird, und daß die Auswerteschaltung wenigstens eine Auswerteeinheit (24, an 27, an 30, an 36) enthält, die auf eine solche Übersteuerung anspricht.

3. Schaltungsanordnung nach Anspruch 2, **dadurch gekennzeichnet, daß** zwischen wenigstens einer Elektrode (4, 5) und einem ihr zugeordneten Eingang der Schalteranordnung (12, 13) ein Impedanzwandler (8, 9) mit relativ hoher Eingangsimpedanz und relativ niedriger Ausgangsimpedanz liegt.

4. Schaltungsanordnung nach Anspruch 2 oder 3, **dadurch gekennzeichnet, daß** mittels der Schalteranordnung (12, 13) aufeinanderfolgend jeweils eine von mehreren Elektroden (4, 5) von dem ihr zugeordneten Eingang der Auswerteschaltung zu trennen und der ihr zugeordnete Eingang an das Bezugspotential zu legen ist.

5.  Schaltungsanordnung nach einem der Ansprüche 2 bis 4, **dadurch gekennzeichnet, daß** die Eingänge der Auswerteschaltung die Eingänge des Signalverstärkers (16) sind.

6.  Schaltungsanordnung nach einem der Ansprüche 2 bis 5, **dadurch gekennzeichnet, daß** der Ausgang des Signalverstärkers (16) über einen Multiplexer (18), einen Analog-Digital-Wandler (20) und einen Mikroprozessor (22) mit der wenigstens einen Aus-werteeinheit (24, an 27, an 30, an 35) verbunden ist.

7.  Schaltungsanordnung nach Anspruch 6, **dadurch gekennzeichnet, daß** der Mikroprozessor (22) die Schalteranordnung (12, 13) und den Multiplexer (18) steuert.

8.  Schaltungsanordnung nach Anspruch 6 oder 7, **dadurch gekennzeichnet, daß** ein weiterer Eingang des Multiplexers (18) von einer einem Erregerstrom der Durchflußmeßanordnung proportionalen Spannung (an 46) gespeist wird.

9.  Schaltungsanordnung nach einem der Ansprüche 2 bis 8, **dadurch gekennzeichnet, daß** als Auswerteeinheit ein alphanumerisches LCD-Display (24) und/oder ein Registriergerät (an 27) und/oder ein Binärimpuls-Auswertegerät (an 30) und/oder ein Optokopplerimpuls-Auswertegerät (an 36) vorgesehen ist.

10. Schaltungsanordnung nach Anspruch 1, **dadurch gekennzeichnet, daß** die Alarmgeberschaltung (52, 54) einen Summierer (52) enthält, dessen Eingänge an die Elektroden (4, 5) angeschlossen sind und dessen Ausgang über einen Schwellwertschalter (54) mit einem Alarmgeber (Alarm 1) verbunden ist.

11. Schaltungsanordnung nach Anspruch 1 oder 10, **dadurch gekennzeichnet, daß** die Alarmgeberschaltung (52, 56, 58, 60) einen Summierer (52) enthält, dessen Eingänge an die Elektroden (4, 5) angeschlossen sind und dessen Ausgang über ein Hochpaßfilter (56), einen Demodulator (58) und einen Schwellwertschalter (60) mit einem Alarmgeber (Alarm 2) verbunden ist.

**Claims**

1.  A circuit arrangement for the detection of errors in a magnetic inductive flow measurement arrangement through which an electrically-conductive measuring fluid flows, the fluid being maintained at a reference potential, and in which the measuring fluid is to be brought into contact with at least two electrodes (4, 5) which send signals to inputs of an evaluation circuit associated therewith, wherein an alarm generating circuit (12, 13; 52, 54; 52, 56, 58, 60) is connected upstream of the evaluation circuit, **characterised in that** the alarm generating circuit transmits an alarm signal in the case of inequality of the noise portions of the signal voltages derived from the electrodes (4, 5).

2.  A circuit arrangement according to claim 1, **characterised in that** a switching arrangement (12, 13) is connected upstream of the evaluation circuit, by means of which at least one of the electrodes (4, 5) may be disconnected from its associated input on the evaluation circuit and the associated input set to the reference potential, and that the evaluation circuit comprises a signal amplifier (16) which is saturated upon isolation of at least one input of the evaluation circuit, and that the evaluation circuit has at least one output unit (24, at 27, at 30, at 36) which responds to such saturation.

3.  A circuit arrangement according to claim 2, **characterised in that** an impedance converter (8, 9) with a relatively high input impedance and a relatively low output impedance is positioned between at least one electrode (4, 5) and an input of the switching arrangement (12, 13) associated therewith.

4.  A circuit arrangement according to claim 2 or 3, **characterised in that** consecutively, by means of the switching circuit (12, 13), a respective one of a plurality of electrodes (4, 5) may be disconnected from its associated input of the evaluation circuit, and the associated input set to the reference potential.

5.  A circuit arrangement according to one of claims 2 to 4, **characterised in that** the inputs of the evaluation circuit are the inputs of the signal amplifier (16).

6.  A circuit arrangement according to one of claims 2 to 5, **characterised in that** the output of the signal amplifier (16) is connected to the at least one output unit (24, at 27, at 30, at 35) via a multiplexer (18), an analogue/digital converter (20) and a microprocessor (22).

7.  A circuit arrangement according to claim 6, **characterised in that** the microprocessor (22) controls the switching arrangement (12, 13) and the multiplexer (18).

8.  A circuit arrangement according to claim 6 or 7, **characterised in that** a further input of the multiplexer (18) is supplied by a voltage (at 46) proportional to an exciter current of the flow measurement arrangement.

9. A switching arrangement according to one of claims 2 to 8, **characterised in that** an alphanumeric LCD display (24) and/or a recorder (at 27) and/or a binary pulse evaluation device (at 30) and/or an optocoupler pulse evaluation device (at 36) is/are provided as an output unit.

10. A circuit arrangement according to claim 1, **characterised in that** the alarm generating circuit (52, 54) contains a summing unit (52), the inputs of which are connected to the electrodes (4, 5) and the output of which is connected to an alarm generator (Alarm 1) via a threshold switch (54).

11. A circuit arrangement according to claim 1 or 10, **characterised in that** the alarm generating circuit (52, 56, 58, 60) comprises a summing unit (52) the inputs of which are connected to the electrodes (4, 5) and the output of which is connected to an alarm generator (Alarm 2) via a high-pass filter (56), a demodulator (58) and a threshold switch (60).

## Revendications

1. Circuit destiné à déterminer des défauts dans un débitmètre magnéto-inductif, qui est traversé par une substance de mesure électriquement conductrice, maintenue à un potentiel de référence et dans lequel la substance de mesure doit être amenée en contact avec au moins deux électrodes (4, 5), qui délivrent des signaux de mesure à des entrées qui leurs sont affectées d'un circuit d'exploitation, un circuit avertisseur (12, 13 ; 52, 54 ; 52, 56, 58, 60) étant monté en amont du circuit d'exploitation, **caractérisé en ce que** le circuit avertisseur délivre un signal d'alarme en cas d'inégalité des valeurs des tensions de signaux dérivées des électrodes (4, 5).

2. Circuit selon la revendication 1, **caractérisé en ce qu'**en amont du circuit d'exploitation est monté un dispositif à interrupteur (12, 13), au moyen duquel au moins l'une des électrodes (4, 5) peut être séparée de l'entrée du circuit d'exploitation qui lui est affectée et l'entrée qui lui est affectée peut être raccordée au potentiel de référence, **en ce que** le circuit d'exploitation contient un amplificateur de signaux (16), qui est surmodulé en cas d'isolation d'au moins une entrée du circuit d'exploitation et **en ce que** le circuit d'exploitation contient au moins une unité d'exploitation (24, à 27, à 30, à 36), qui réagit à une telle surmodulation.

3. Circuit selon la revendication 2, **caractérisé en ce**

**qu'**un convertisseur d'impédance (8, 9) avec une impédance d'entrée relativement élevée et une impédance de sortie relativement basse se trouve entre au moins une électrode (4, 5) et une entrée du dispositif à interrupteur (12, 13) qui lui est affectée.

4. Circuit selon la revendication 2 ou 3, **caractérisé en ce qu'**au moyen du dispositif à interrupteur (12, 13) on peut séparer successivement une de plusieurs électrodes (4, 5) de l'entrée du circuit d'exploitation qui lui est affectée et l'entrée qui lui est affectée peut être raccordée au potentiel de référence.

5. Circuit selon l'une des revendications 2 à 4, **caractérisé en ce que** les entrées du circuit d'exploitation sont les entrées de l'amplificateur de signaux (16).

6. Circuit selon l'une des revendications 2 à 5, **caractérisé en ce que** la sortie de l'amplificateur de signaux (16) est reliée à au moins une unité d'exploitation (24, à 27, à 30, à 35), par l'intermédiaire d'un multiplexeur (18), d'un convertisseur analogique/numérique et d'un microprocesseur (22).

7. Circuit selon la revendication 6, **caractérisé en ce que** le microprocesseur (22) commande le dispositif à interrupteur (12, 13) et le multiplexeur (18).

8. Circuit selon la revendication 6 ou 7, **caractérisé en ce qu'**une entrée supplémentaire du multiplexeur (18) est alimentée par une tension (à 46) proportionnelle à un courant d'excitation du débitmètre.

9. Circuit selon l'une des revendications 2 à 8, **caractérisé en ce qu'**est prévu comme unité d'exploitation un écran LCD alphanumérique (24) et/ou un appareil d'enregistrement (à 27) et/ou un appareil d'exploitation à impulsions binaires (à 30) et/ou un appareil d'exploitation à impulsions de coupleur optoélectronique (à 36).

10. Circuit selon la revendication 1, **caractérisé en ce que** le circuit d'alarme (52, 54) contient un additionneur (52) dont les entrées sont raccordées aux électrodes (4, 5) et dont la sortie est reliée à un avertisseur (alarme 14) par l'intermédiaire d'un interrupteur de valeur-seuil (60).

11. Circuit selon la revendication 1 ou 10, **caractérisé en ce que** le circuit d'alarme (52, 56, 58, 60) contient un additionneur (52), dont les entrées sont raccordées aux électrodes (4, 5) et dont la sortie est reliée à un avertisseur d'alarme (Alarm 2) par l'intermédiaire d'un filtre passe-haut (6), d'un démodulateur (58) et d'un interrupteur de valeur-seuil (60).

# Fig.1

# Fig. 2

Fig.3

Fig.4

# Fig.5

$I_{ERR}$

6

+U_S

71  73  50  75  16  17

2

7

U=K x (2U_S)

4  1  5  -U_S

3  70

52  72

74  54  76

ALARM 1 wenn
$|+U_S| \neq |-U_S|$

80  82  84  60  86

ALARM 2
wenn

56  58

Rauschanteil $+U_S \neq$
Rauschanteil $-U_S$